# EUROPÄISCHE PATENTANMELDUNG

(11) **EP 2 706 340 A2**
(43) Veröffentlichungstag der Anmeldung: **12.03.2014**
(21) Anmeldenummer: 13004307.8
(22) Anmeldetag: 02.09.2013
(51) Int. Cl.: G01M 11/00, G01M 11/02, G02B 27/30

(54) **Vorrichtung und verfahren zum prüfen der ausrichtung wenigstens einer optischen fläche eines optischen systems**

(30) Priorität: 05.09.2012 DE 102012017519
(71) Anmelder: Wematec GmbH, 82407 Wielenbach (DE)
(72) Erfinder: Welzmüller, Erwin, 82407 Wielenbach (DE); Welzmüller, Andreas, 82407 Wielenbach (DE)
(74) Vertreter: Roos, Peter

(57) **Zusammenfassung**

Die Erfindung betrifft eine Vorrichtung zum Prüfen der Ausrichtung wenigstens einer optischen Fläche (52 bis 62) eines optischen Systems (50), umfassend eine Lichtquelle (12) zur Erzeugung eines Messlichtstrahls, einen Strahlteiler (16) zum Einkoppeln des Messlichtstrahls in einen optischen Mess/Erfassungspfad (18), der in einer Längsrichtung (L) der Vorrichtung verläuft, eine Abbildungsoptik (20, 22) im Mess/Erfassungspfad (18), mittels welcher der eingekoppelte Messlichtstrahl kollimiert wird, bevor dieser aus der Vorrichtung austritt, um auf die zu prüfende optische Fläche (52 bis 62) aufzutreffen, und eine Erfassungseinrichtung (24, 26) zur Erfassung des an der zu prüfenden optischen Fläche (52 bis 62) zurückreflektierten Messlichtstrahls nach dessen Zurücklaufen entlang des Mess-/Erfassungspfads (18) und Auskoppeln mittels des Strahlteilers (16). Erfindungsgemäß ist vorgesehen, dass die Abbildungsoptik (20, 22) einen Umlenkspiegel (22) aufweist, um den Messlichtstrahl in einer Richtung quer zur Längsrichtung (L) der Vorrichtung aus der Vorrichtung austreten zu lassen. Damit ist die Vorrichtung vorteilhaft auch in äußerst beengten räumlichen Verhältnissen einsetzbar.

## Beschreibung

Die Erfindung betrifft eine Vorrichtung zum Prüfen der Ausrichtung wenigstens einer optischen Fläche eines optischen Systems, umfassend: eine Lichtquelle zur Erzeugung eines Messlichtstrahls; einen Strahlteiler zum Einkoppeln des Messlichtstrahls in einen optischen Mess/Erfassungspfad, der in einer Längsrichtung der Vorrichtung verläuft; eine Abbildungsoptik im Mess/Erfassungspfad, mittels welcher der eingekoppelte Messlichtstrahl kollimiert wird, bevor dieser aus der Vorrichtung austritt, um auf die zu prüfende optische Fläche aufzutreffen; und eine Erfassungseinrichtung zur Erfassung des an der zu prüfenden optischen Fläche zurückreflektierten Messlichtstrahls nach dessen Zurücklaufen entlang des Mess-/Erfassungspfads und Auskoppeln mittels des Strahlteilers.

Ferner betrifft die Erfindung ein entsprechendes Prüfverfahren, umfassend: Erzeugen eines Messlichtstrahls; Einkoppeln des Messlichtstrahls in einen in einer Längsrichtung verlaufenden optischen Mess/Erfassungspfad; Kollimieren des eingekoppelten Messlichtstrahls und Auftreffenlassen des kollimierten Messlichtstrahls auf die zu prüfende bzw. zu justierende optische Fläche; und Erfassen des an der zu prüfenden optischen Fläche zurückreflektierten Messlichtstrahls nach dessen Zurücklaufen entlang des Mess/Erfassungspfads und Auskoppeln aus dem Mess/Erfassungspfad.

Eine derartige Vorrichtung und ein derartiges Verfahren sind als "Autokollimator" bzw. "Autokollimation" aus dem Stand der Technik bekannt. Eine wichtige Anwendung von Autokollimatoren besteht darin, gleichzeitig die Ausrichtung mehrerer optischer Flächen, z. B. Linsenflächen, Spiegelflächen, Kristallflächen oder andere Grenzflächen in einem optischen System (z. B. Lasersystem) zu prüfen bzw. zu messen. Auf Basis des Prüf- bzw. Messergebnisses kann dann z. B. eine Justage der betreffenden optischen Systemkomponenten durchgeführt werden. Insbesondere können mit einem Autokollimator optische Flächen in eine planparallele Ausrichtung zueinander und/oder bezüglich einer optischen Achse justiert werden.

Das Grundprinzip von Autokollimatoren besteht darin, einen Kollimator (zur Erzeugung eines kollimierten Messlichtstrahls) mit einem Fernrohr (zur Erfassung des zurückreflektierten Messlichtstrahls) zu kombinieren. Zur Implementierung dieser beiden Funktionen in einem Gerät wird zumeist ein mehr oder weniger "langgestreckter" gemeinsamer Mess/Erfassungspfad samt gemeinsamer Abbildungsoptik verwendet, um einerseits den von der Lichtquelle erzeugten Messlichtstrahl zu kollimieren und andererseits den zurückreflektierten Messlichtstrahl auf den Bereich der Erfassungseinrichtung abzubilden.

Da die Lichtquelle (z. B. Laser) und die Erfassungseinrichtung (z. B. Okular oder bildgebende Sensorik) nicht an ein und derselben Stelle der Vorrichtung angeordnet werden können, wird mittels eines Strahlteilers eine Einkopplung des Messlichtstrahls in den gemeinsamen Mess/Erfassungspfad und eine Auskopplung des zurückreflektierten Messlichtstrahls aus diesem Mess/Erfassungspfad mit verschiedenen Richtungen der Einkopplung und der Auskopplung vorgesehen, um eine räumliche Behinderung zwischen Lichtquelle und Erfassungseinrichtung zu vermeiden.

Im Hinblick auf die Erzielung einer möglichst großen Genauigkeit bzw. Empfindlichkeit einer Messung (z. B. Messung eines etwaigen Verkippungswinkels einer optischen Fläche) sind größere Brennweiten der Abbildungsoptik und mithin längliche Bauformen zur Unterbringung eines entsprechend langen Mess/Erfassungspfads entlang einer optischen Achse des Autokollimators von Vorteil. Die Bauformen der seit ca. 30 Jahren auf dem Markt befindlichen Autokollimatoren (mit einem langgestreckten Gehäuse in Richtung des austretenden Messlichtstrahls) ähneln sich in dieser Hinsicht sehr stark.

Nachteilig ist bei den bekannten Autokollimatoren, dass in Richtung der optischen Kollimatorachse sehr viel Platz benötigt wird, um den Autokollimator für die Prüfung eines optischen Systems zu platzieren. Je nach optischem System ist es daher oftmals nicht möglich, den Autokollimator innerhalb des optischen Systems zu platzieren, sondern nur außerhalb des Systems. Dieser Nachteil verschärft sich, da die hier interessierenden optischen Systeme, insbesondere z. B. Lasersysteme, immer kompakter und kleiner werden, was den Einsatz herkömmlicher Autokollimatoren erschwert bzw. oftmals unmöglich macht.

Es ist eine Aufgabe der vorliegenden Erfindung, eine Vorrichtung (Autokollimator) und ein Verfahren der eingangs genannten Art hinsichtlich der Einsatzmöglichkeiten zu verbessern.

Bei der erfindungsgemäßen Vorrichtung ist vorgesehen, dass die Abbildungsoptik einen Umlenkspiegel aufweist, um den Messlichtstrahl in einer Richtung quer zur Längsrichtung der Vorrichtung aus der Vorrichtung austreten zu lassen. Das erfindungsgemäße Verfahren ist dementsprechend dadurch gekennzeichnet, dass der Messlichtstrahl derart umgelenkt wird, dass dieser in einer Richtung quer zur Längsrichtung auf die zu prüfende optische Fläche gerichtet wird.

Die erfindungsgemäße Vorrichtung ist im Bereich des Messlichtstrahlaustritts (und des Eintritts des oder der zurückreflektierten Messlichtstrahlen) gewissermaßen mit einem "Periskop" kombiniert, welches es vorteilhaft ermöglicht, zumindest den zum Austritt des Messlichtstrahls bzw. und Eintritt des zurückreflektierten Messlichtstrahls vorgesehenen Teil der Vorrichtung auch in kleineren Zwischenräumen zwischen Komponenten des zu prüfenden optischen Systems zu platzieren.

Mit der erfindungsgemäß vorgesehenen Strahlumlenkung wird somit der Platzbedarf beim Einsatz der Vorrichtung minimiert. Besonders vorteilhaft erfordert dies bei der Erfindung keine Reduzierung der Länge eines langgestreckten Mess/Erfassungspfads bzw. eines langgestreckten Gehäusebereiches, da die Vorrichtung in Richtung dieser "großen Abmessung" in der Praxis zumeist problemlos quer aus dem betreffenden Zwischenraum herausragen kann.

In an sich bekannter Weise kann bei der Vorrichtung eine langgestreckte Gehäuseanordnung bzw. ein langgestrecktes (z. B. tubusartiges) Gehäuseteil zur Unterbringung des Mess/Erfassungspfads und insbesondere zur Lagerung des Strahlteilers und der Komponenten der Abbildungsoptik vorgesehen sein.

Als Lichtquelle kann z. B. ein Laser (z. B. Halbleiterlaser) oder z. B. eine LED vorgesehen sein, bevorzugt zur Erzeugung eines sichtbaren (z. B. roten) Messlichtstrahls.

Es versteht sich, dass die optischen Eigenschaften wie Transmissions- bzw. Reflexionskoeffizienten der eingesetzten optischen Vorrichtungskomponenten wie auch die Empfindlichkeit der eingesetzten optischen Erfassungseinrichtung auf die Wellenlänge bzw. das Wellenlängenspektrum der verwendeten Lichtquelle abgestimmt sein sollten.

Im Hinblick auf die gemeinsame Verwendung der Abbildungsoptik sowohl bei der Kollimation des Messlichtstrahls als auch bei der Abbildung des zurückreflektierten Messlichtstrahls in den Bereich der optischen Erfassungseinrichtung ist es bevorzugt, eine Justierbarkeit der Lichtquelle und/oder der Erfassungseinrichtung vorzusehen, und zwar besonders bevorzugt sowohl hinsichtlich der Orientierung als auch der Position der betreffenden Komponente(n), insbesondere um damit eine möglichst exakte Kollimation und/oder Abbildung des zurückreflektierten Strahls in die Erfassungseinrichtung zu gewährleisten.

In diesem Zusammenhang ist jedoch anzumerken, dass der hier verwendete Begriff "Kollimation" (des Messlichtstrahls) zwar vor allem den in nahezu allen Anwendungen bevorzugten Fall einer (im Rahmen des praktisch möglichen) exakten Parallelrichtung der Lichtstrahlen umfasst. Es soll jedoch im Rahmen der Erfindung (z. B. für spezielle Anwendungsfälle) nicht ausgeschlossen sein, die Abbildungsoptik davon abweichend auszulegen (ggf. z. B. mit einer weiteren Abbildungsoptik im Pfad zwischen Strahlteiler und Erfassungseinrichtung).

In einer Ausführungsform umfasst die Erfassungseinrichtung ein Okular, gegebenenfalls mit einer so genannten "Okularstrichplatte" (zur Beobachtung bzw. Vermessung von Flächenausrichtungen durch einen Benutzer), wobei je nach Art der verwendeten Lichtquelle eine indirekte Erfassung des zurückreflektierten Messlichtstrahls bevorzugt ist, bei welcher von der oder den zurückreflektieren Strahlen auf einem Beobachtungsschirm ("Mattscheibe") erzeugte Lichtflecke über das Okular beobachtet werden.

Bevorzugt umfasst die Erfassungseinrichtung jedoch eine ortsauflösende (z. B. bildgebende) optische bzw. optoelektronische Sensorik für den (wenigstens einen) zurückreflektierten Messlichtstrahl. Hierfür kann z. B. ein geeigneter Sensor (z. B. CCD, CMOS-Bildsensor etc.) in einer Abbildungsebene der Erfassungseinrichtung angeordnet werden. Alternativ kann in der Abbildungsebene ein Schirm zur Erzeugung eines Lichtflecks pro zurückreflektiertem Strahl angeordnet sein, wobei mittels einer Kamera (z. B. CCD-Kamera) ein Bild dieses Schirms aufgenommen wird. Die Kamera kann hierfür z. B. auf der Rückseite des Schirms angeordnet sein, um das Schirmbild (Lichtfleck(e)) von der Rückseite her aufzunehmen und beispielsweise an einen an die Vorrichtung anschließbaren Monitor (zur Wiedergabe für einen Benutzer) auszugeben.

In einer Ausführungsform der erfindungsgemäßen Vorrichtung ist der Umlenkspiegel der Abbildungsoptik derart angeordnet, dass der Messlichtstrahl wenigstens annähernd orthogonal zur Längsrichtung der Vorrichtung austritt (Umlenkungswinkel von 90°). Hierfür kann der Winkel zwischen Längsrichtung und Austrittsrichtung z. B. im Bereich von 80° bis 100° liegen. Damit ergibt sich zumeist eine besonders vorteilhafte Anordenbarkeit der Vorrichtung auch in kleinsten Zwischenräumen des betreffenden optischen Systems.

In einer Ausführungsform umfasst die Vorrichtung ein Gehäuse oder Gehäuseteil mit einer Austrittsöffnung, an welcher der kollimierte Messlichtstrahl aus der Vorrichtung austritt (und der zurückreflektierte Messlichtstrahl in die Vorrichtung eintritt). Die Austrittsöffnung ist hierbei bevorzugt allenfalls geringfügig größer als der Strahlquerschnitt des austretenden Strahls.

In einer Weiterbildung dieser Ausführungsform ist das Gehäuse im Bereich der Austrittsöffnung mit Mitteln zur Befestigung und/oder Verstellung bzw. Justage eines "Anlageadapters" versehen. Ein derartiger, bevorzugt auswechselbar vorgesehener Anlageadapter, der z. B. als ein an der Außenseite der Austrittsöffnung aufgesetzter Adapterring ausgebildet sein kann, kann z. B. nützlich sein, um durch eine direkte Anlage der distalen Adapterseite an einer Komponente des zu prüfenden bzw. zu justierenden optischen Systems eine gewünschte relative Lage der Vorrichtung am bzw. im optischen System zu gewährleisten. Dies macht die Handhabung der Vorrichtung für einen Benutzer besonders komfortabel). Die an der Vorrichtung vorgesehenen Befestigungs- und/oder Justagemittel für einen solchen Anlageadapter können z. B. ein im Bereich der Austrittsöffnung angeordnetes, in Strahlrichtung orientiertes Innengewinde oder Außengewinde zum Anschrauben des Adapters umfassen. Denkbar ist außerdem, dass der Anlageadapter seinerseits mit Befestigungsmitteln zum Befestigen der Vorrichtung an einem stationären Teil oder einer Komponente des zu prüfenden Systems ausgestattet ist.

In einer anderen Weiterbildung ist vorgesehen, dass das genannte Gehäuse bzw. Gehäuseteil im Bereich der Austrittsöffnung eine in Austrittsrichtung (Strahlrichtung) betrachtete Gehäuseabmessung von weniger als 4 cm, insbesondere weniger als 3 cm besitzt. Eine derart kleine Abmessung ermöglicht vorteilhaft den Einsatz der Vorrichtung in entsprechend kleinen Zwischenräumen des betreffenden optischen Systems.

In einer noch weiteren Weiterbildung ist an (einschließlich "in") der Austrittsöffnung eine Linse der Abbildungsoptik angeordnet.

Die Abbildungsoptik umfasst im einfachsten Fall eine (einzige) fokusierende Linse, die als "Kollimationslinse" für den Messlichtstrahl und zugleich als Abbildungslinse für den zurückreflektierten Messlichtstrahl dient. Insofern kann es sich bei der vorstehend erwähnten, im Bereich des Strahlaustrittes (Austrittsöffnung) angeordneten Linse insbesondere um eine solche fokusierende Linse bzw. Kollimationslinse handeln.

Eine an der Austrittsöffnung angeordnete Linse ist ein Beispiel eines optischen Elements der Abbildungsoptik, welches im Strahlengang des Messlichtstrahls hinter dem Umlenkspiegel angeordnet ist. Prinzipiell können Elemente der Abbildungsoptik sowohl vor als auch hinter dem Umlenkspiegel angeordnet werden.

Die erwähnte Anordnung einer fokusierenden Linse der Abbildungsoptik hinter dem Umlenkspiegel ist jedoch z. B. von Vorteil, um einen möglichst langen optischen Mess/Erfassungspfad im Vorrichtungsgehäuse unterzubringen. Außerdem kann eine solche Linse vorteilhaft gleichzeitig als die Austrittsöffnung verschließender Staubschutz fungieren. Alternativ oder zusätzlich zur Anordnung einer Linse im Bereich der Austrittsöffnung kann auch ein für das Messlicht transparentes Fenster (als Staubschutz) vorgesehen sein.

Für die Gestaltung des Strahlteilers kann vorteilhaft auf an sich aus dem Stand der Technik bekannte Konstruktionen bzw. Funktionsprinzipien zurückgegriffen werden.

Beispielsweise kann eine so genannte "geometrische Strahlteilung" vorgesehen sein, bei welcher die Einkopplung oder die Auskopplung mittels eines Spiegels erfolgt, der schräg gestellt und geringfügig lateral versetzt bezüglich einer optischen Achse des Mess/Erfassungspfads angeordnet ist, so dass der Messlichtstrahl und der zurückreflektierte Messlichtstrahl im Bereich des Strahlteilers gewissermaßen aneinander vorbei verlaufen, wobei eines von Messlichtstrahl und zurückreflektiertem Messlichtstrahl mittels des Umlenkspiegels eingekoppelt bzw. ausgekoppelt wird. Der Umlenkspiegel kann z. B. 45° schräg gestellt bezüglich der optischen Achse angeordnet sein, so dass sich eine Strahlumlenkung (für die Einkopplung oder für die Auskopplung) um 90° ergibt.

Gemäß eines anderen Konzepts kann der Strahlteiler eine so genannte "physikalische Strahlteilung" vorsehen, bei welcher die Einkopplung oder die Auskopplung mittels eines auf der optischen Achse des Mess/Erfassungspfads angeordneten und bezüglich dieser optischen Achse schräg gestellten teildurchlässigen Spiegels realisiert wird. Hierbei wird eines von Messlichtstrahl und zurückreflektiertem Messlichtstrahl am Spiegel reflektiert (z. B. mit einem Umlenkwinkel von wenigstens annähernd 90°, bei einem Schrägstellungswinkel von etwa 45°), wohingegen der andere Strahl den teildurchlässigen Spiegel passiert, ohne umgelenkt zu werden.

In einer dem letzteren Konzept folgenden Ausführungsform ist der teildurchlässige Spiegel durch einen Strahlteilerwürfel (aus zwei aneinandergefügten Prismen) gebildet.

In einer Ausführungsform ist die Einkopplung oder die Auskopplung des Messlichtstrahls bzw. des zurückreflektierten Messlichtstrahls am Strahlteiler als eine Transmission durch den Strahlteiler hindurch vorgesehen, also ohne Strahlumlenkung, wohingegen bei der Auskopplung bzw. Einkopplung eine mehrfache, insbesondere zweifache, Strahlumlenkung derart vorgesehen ist, dass der betreffende Strahl um wenigstens annähernd 180° umgelenkt wird (z. B. durch zwei 90°-Umlenkungen) oder dass der betreffende Strahl einen Parallelversatz ohne nennenswerte Umlenkung erfährt (z. B. durch zwei 90°-Umlenkungen mit entgegengesetzten Umlenkungsorientierungen).

Mit beiden Gestaltungsvarianten ist es vorteilhaft möglich, der ganzen Vorrichtung eine insgesamt langgestreckte Formgestaltung zu verleihen. Bei herkömmlichen Autokollimatoren besitzt das Gehäuse in der Regel zwar eine langgestreckte Grundform, wobei jedoch in diesem Gehäuseverlauf an einer Stelle eine relativ voluminöse, in Querrichtung abstehende Gehäuseausbuchtung erforderlich ist, um darin die Lichtquelle oder die Erfassungseinrichtung unterzubringen.

Demgegenüber kann bei der vorstehend beschriebenen Ausführungsform eine solche seitliche Gehäuseausbuchtung dadurch vermieden werden, dass anstelle des herkömmlichen 90°-Winkelversatzes zwischen Einkoppelrichtung und Auskoppelrichtung ein lateraler Positionsversatz von Lichtquelle und Erfassungseinrichtung vorgesehen wird, wobei jedoch zumindest annähernd eine Parallelität der Richtungen der ein- und auszukoppelnden Messlichtstrahlen vorgesehen wird. Mit anderen Worten können die optische Achse des Mess/Erfassungspfads, die optische Achse der Lichtquelle und die optische Achse der Erfassungseinrichtung allesamt parallel zueinander vorgesehen sein.

In einer diesbezüglich besonders vorteilhaften Ausführungsvariante sind die Lichtquelle und die Erfassungseinrichtung nicht auf derselben (in Längsrichtung betrachteten) Seite des Strahlteilers angeordnet. Vielmehr ist es aus Platzgründen zumeist günstiger, lediglich eines von Lichtquelle und Erfassungseinrichtung auf der dem Mess/Erfassungspfad abgewandten Seite des Strahlteilers anzuordnen, wohingegen die andere dieser beiden Vorrichtungskomponenten "vor dem Strahlteiler" (in Längsrichtung betrachtet im Bereich des Mess/Erfassungspfads) angeordnet ist, jedoch mit einem lateralen Versatz zur optischen Achse des Mess/Erfassungspfads.

Eine konstruktiv einfache Realisierung der vorstehenden Ausführungsform mit parallelen optischen Achsen des Mess/Erfassungspfads, der Lichtquelle und der Erfassungseinrichtung sieht die Verwendung einer Kombination von zwei Spiegeln bzw. Spiegelflächen vor, wobei einer dieser Spiegel als teildurchlässiger Spiegel nach dem oben bereits erwähnten Prinzip der "physikalischen Strahlteilung" eingesetzt wird, wohingegen der andere Spiegel als ein Umlenkspiegel fungiert, welcher entweder den von der Lichtquelle erzeugten Messlichtstrahl umlenkt, bevor dieser auf den teildurchlässigen Spiegel trifft, oder den vom teildurchlässigen Spiegel mittels Reflexion ausgekoppelten zurückreflektierten Messlichtstrahl in die optische Achse der Erfassungseinrichtung umlenkt.

Die beiden genannten Spiegel, z. B. einen Winkel von wenigstens annähernd 90° einschließend, können z. B. separat ausgebildet oder z. B. durch entsprechend beschichtete Flächen eines Prismas gebildet sein. Auch kann hierfür z. B. ein Strahlteilerwürfel mit einem weiteren separat ausgebildeten Spiegel eingesetzt werden.

Die vorstehend für die erfindungsgemäße Vorrichtung erläuterten Ausführungsformen und besonderen Gestaltungsdetails, einzeln oder in beliebigen Kombinationen, können in analoger Weise auch für das erfindungsgemäße Prüfverfahren vorgesehen sein.

Eine besonders interessante Verwendung der erfindungsgemäßen Vorrichtung bzw. des erfindungsgemäßen Verfahrens ergibt sich z. B. für die Justage von optischen Komponenten eines Lasersystems. Der Einsatz der Erfindung ist hierbei sowohl bei einem Aufbau eines Lasersystems bzw. Laserresonators als auch im Wartungs- oder Reparaturfall einsetzbar (wenn z. B. eine Komponente des betreffenden Systems ausgetauscht wurde).

Die Erfindung ist jedoch keineswegs auf dieses Anwendungsgebiet eingeschränkt, sondern kann in verschiedenen technischen Gebieten benutzt werden, insbesondere um optische Flächen planparallel zu justieren oder Winkelabweichungen von betreffenden optischen Flächen zueinander und/oder bezüglich einer optischen Achse des Systems zu prüfen (einschließlich zu "messen").

Die erfindungsgemäß vorgesehene "periskopartige" Strahlumlenkung vereinfacht ganz erheblich eine Prüfung bzw. Justage von optischen Flächen auch in aufgrund beengter Platzverhältnisse schwer zugänglichen Bereichen. Insbesondere kann mit der Erfindung nicht nur eine Platzierung der Vorrichtung an Laserresonatorausgängen, also außerhalb des eigentlichen Lasersystems vorgenommen werden, sondern es können vielmehr auch Komponenten innerhalb des betreffenden Systems (z. B. Laserresonator) durch entsprechende Zwischenfügung der Vorrichtung beliebig zueinander verglichen werden. Der Anwender kann mit einem erfindungsgemäßen Autokollimator, sowohl bei der Herstellung als auch im Reparaturfalle im Feld, komfortabel und rasch einen Laserresonator justieren.

Die Erfindung wird nachfolgend anhand von Ausführungsbeispielen mit Bezug auf die beigefügten Zeichnungen weiter beschrieben. Es stellen dar:
- Fig. 1: eine Schnittansicht eines Autokollimators gemäß eines Ausführungsbeispiels,
- Fig. 2: eine Darstellung zur Veranschaulichung einer Anwendung des Autokollimators von Fig. 1,
- Fig. 3: eine Draufsicht eines Montageprofils samt Komponenten eines damit zu fertigenden Autokollimators gemäß eines weiteren Ausführungsbeispiels,
- Fig. 4: eine Seitenansicht des Montageprofils von Fig. 3,
- Fig. 5: eine Draufsicht eines Montageprofils samt Autokollimatorkomponenten gemäß eines weiteren Ausführungsbeispiels, und
- Fig. 6: eine Seitenansicht der Anordnung von Fig. 5.

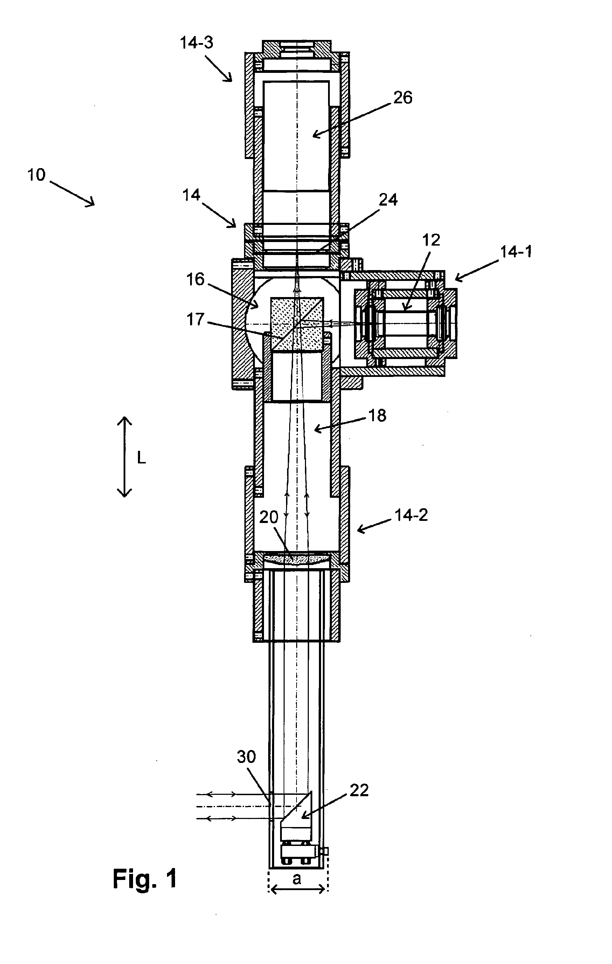

Fig. 1 zeigt einen Autokollimator 10 zum Prüfen der Winkelausrichtung wenigstens einer optischen Fläche eines (in Fig. 1 nicht dargestellten) optischen Systems.

Im dargestellten Ausführungsbeispiel besitzt der Autokollimator 10 als Lichtquelle zur Erzeugung eines Messlichtstrahls einen Laser 12, der im sichtbaren Spektralbereich emittiert, z. B. eine geeignete Laserdiode. Dieser Laser 12 ist in einem Gehäusebereich 14-1 eines insgesamt mit 14 bezeichneten Autokollimatorgehäuses untergebracht.

Der wie in Fig 1 dargestellt von dem Laser 12 mit einer bestimmten Winkeldivergenz erzeugte Messlichtstrahl wird mittels eines Strahlteilerwürfels 16 bzw. eine darin enthaltene teildurchlässige Spiegelfläche 17 um 90° umgelenkt und somit in einen optischen "Mess/Erfassungspfad" 18 eingekoppelt, welcher in einer nachfolgend auch als Längsrichtung L bezeichneten Richtung in einem weiteren, tubusartigen Gehäusebereich 14-2 des Gehäuses 14 verläuft.

Der Mess/Erfassungspfad 18 des Autokollimators 10 enthält eine Abbildungsoptik, die im dargestellten Beispiel von einer Kollimationslinse 20 und einem Umlenkspiegel 22 gebildet ist. Mittels der Abbildungsoptik 20, 22 wird der in den Mess/Erfassungspfad 18 eingekoppelte Messlichtstrahl kollimiert und am Ende des Gehäusebereiches 14-2 umgelenkt, so dass der Messlichtstrahl orthogonal zur Längsrichtung L aus dem Kollimator 10 austritt, um (in Verwendungssituation) auf eine oder mehrere zu prüfende optische Flächen aufzutreffen.

Wenn es sich bei einer zu prüfenden Fläche z. B. um eine ebene Fläche handelt, und der (exakt) kollimierte Messlichtstrahl orthogonal auf diese Fläche auftrifft, so wird der Messlichtstrahl in mehr oder weniger großem Ausmaß (abhängig von der Reflektivität der Fläche) in sich selbst zurückreflektiert (Autokollimation). Eine davon abweichende Ausrichtung der Fläche führt jedoch zu einer Winkelabweichung zwischen dem auftreffenden Messlichtstrahl und dem zurückreflektierten Messlichtstrahl. Dementsprechend kann durch eine Erfassung des zurückreflektierten Messlichtstrahls die Ausrichtung der betreffenden optischen Fläche(n) geprüft bzw. bei Bedarf auch quantitativ gemessen werden.

Zu diesem Zweck umfasst der dargestellte Autokollimator ferner eine Erfassungseinrichtung, um den zurückreflektierten Messlichtstrahl nach dessen Zurücklaufen entlang des Mess/Erfassungspfads 18 und Auskoppeln mittels des Strahlteilers 16 zu erfassen. Die Erfassungseinrichtung ist im dargestellten Beispiel aus einem Beobachtungsschirm 24 und einer Kamera 26 gebildet. Jeder zurückreflektierte Messlichtstrahl erzeugt auf dem "mattscheibenartigen" Schirm 24 einen Lichtfleck, dessen Position charakteristisch für die Winkelausrichtung der reflektierenden Fläche ist. Ein Benutzer kann diese Position(en) z. B. auf einem an der Kamera 26 angeschlossenen externen Monitor beobachten (in Fig. 1 nicht dargestellt).

Der Mess/Erfassungspfad 18 dient sowohl zur Abbildung bzw. Strahlformung (Kollimation) des vom Autokollimator 10 ausgesandten Messlichtstrahls als auch, in umgekehrter Richtung, zur Abbildung bzw. Strahlformung des zurückreflektierten, zu erfassenden Messlichtstrahls. Die Auskopplung des zurückreflektierten Messlichtstrahls aus dem Mess/Erfassungspfad 18 basiert im dargestellten Beispiel auf der Teildurchlässigkeit des im Strahlteilerwürfel 16 gebildeten Strahlteilerspiegels 17.

Die Strahlteilung bzw. der hierfür eingesetzte Strahlteilerwürfel 16 ermöglicht zur Nutzung des Mess/Erfassungspfads 18 sowohl für den ausgesandten als auch für den zurückreflektierten Messlichtstrahl, ohne gegenseitige räumliche Behinderung zwischen Lichtquelle (hier: Laser 12) und Erfassungseinrichtung (hier: Beobachtungsschirm 24 und Kamera 26).

Bei der Auskopplung des zurückreflektierten Messlichtstrahls wird dessen am Strahlteilerspiegel 17 nicht umgelenkter Anteil genutzt, so dass die Erfassungseinrichtung 24, 26 in einem Gehäusebereich 14-3 anzuordnen ist, welcher sich wie der Gehäusebereich 14-2 in der Längsrichtung L, jedoch auf der in Längsrichtung L betrachtet "anderen Seite" des Strahlteilers 16 erstreckt.

Abweichend vom in Fig. 1 dargestellten Ausführungsbeispiel könnten die Positionen des Lasers 12 und der Erfassungseinrichtung 24, 26 auch vertauscht sein. Auch die im Ausführungsbeispiel vorgesehene Winkeldifferenz von 90° zwischen den optischen Achsen dieser Komponenten ist lediglich beispielhaft zu verstehen, d.h. es könnte auch eine andere Winkeldifferenz vorgesehen werden.

Ein entscheidender Vorteil des Autokollimators 10 besteht darin, dass dieser insbesondere auch in beengten räumlichen Verhältnissen einsetzbar ist, da eine hierfür maßgebliche Gehäuseabmessung a, nämlich die im Bereich einer Austrittsöffnung 30 für den austretenden Messlichtstrahl betrachtete Gehäuseabmessung vergleichsweise klein ist. Die Gehäuseabmessung a entspricht einem Durchmesser bzw. einer Breite am distalen Ende des Gehäusebereiches 14-2. Die beachtliche Länge dieses Gehäusebereiches 14-2 spielt hierfür keine Rolle.

Die Gehäuseabmessung a kann z. B. um wenigstens einen Faktor 5, insbesondere um wenigstens einen Faktor 10 kleiner als die in Längsrichtung L betrachtete Abmessung des Gehäuses 14 sein. Für viele Anwendungen bevorzugt ist die Abmessung a kleiner als 4 cm, weiter bevorzugt kleiner als 3 cm.

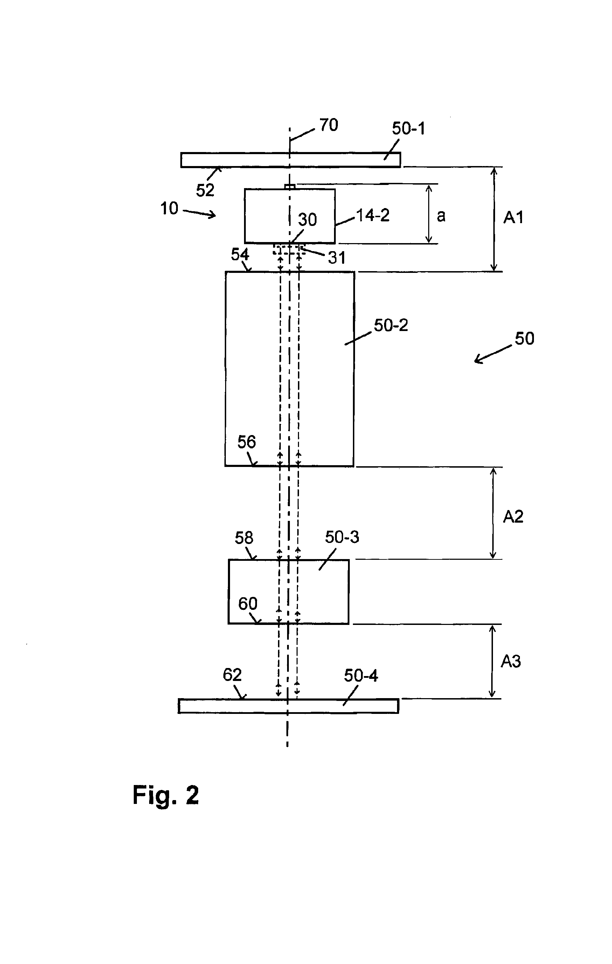

Fig. 2 veranschaulicht eine Verwendungssituation, bei welcher der Autokollimator 10 in räumlich beengten Verhältnissen innerhalb eines Lasersystems 50 zum Justieren von dessen Systemkomponenten 50-1 bis 50-4 eingesetzt wird.

lm dargestellten Beispiel umfasst das Lasersystem 50 einen ersten Resonatorspiegel (z. B. teildurchlässiger Auskoppelspiegel) 50-1, einen Laserkristall ("aktives Medium") 50-2, einen Güteschalter ("Q-switch") 50-3 und einen zweiten (z. B. vollreflektierenden) Resonatorpiege! 50-4.

Bei der Justage des Lasersystems 50, sei es bei dessen Fertigung oder nach Austausch wenigstens einer der Komponenten 50-1 bis 50-4 im Rahmen einer Wartung bzw. einer Reparatur, geht es darum, mittels des Autokollimators 10 die Komponenten 50-1 bis 50-4 bzw. deren relevante, d.h. optisch wirksame Flächen 52 bis 62 in einer gewünschten Weise bezüglich einer optischen Achse 70 des Lasersystems auszurichten.

Die bei dem Autokollimator 10 relativ kleine Gehäuseabmessung a ermöglicht es, das die Austrittsöffnung 30 aufweisende Ende des Gehäusebereiches 14-2 vorteilhaft in jeden der zwischen den Komponenten 50-1 bis 50-4 vorhandenen Zwischenräume zu platzieren. Die lichten Weiten dieser Zwischenräume sind in Fig. 2 mit A1, A2 und A3 bezeichnet. Die Gehäuseabmessung a ist vorteilhaft kleiner als jede der Zwischenraumweiten A1 bis A3.

Im dargestellten Beispiel kann z. B. eine planparallele Ausrichtung der optischen Flächen 52 bis 62 wie folgt durchgeführt werden:
Zunächst wird wie in Fig. 2 dargestellt der Autokollimator 10 derart im Zwischenraum zwischen dem Spiegel 50-1 und dem Laserkristall 50-2 platziert, dass der in Fig. 2 gestrichelt eingezeichnete kollimierte Messlichtstrahl an den Flächen 54, 56, 58, 60 und 62 zurückreflektiert wird. Diese insgesamt fünf Reflexionen erzeugen auf dem Beobachtungsschirm 24 (Fig. 1) des Autokollimators 10 dementsprechend fünf Lichtflecke, deren Positionen auf dem Schirm 24 von den jeweiligen Ausrichtungen der Flächen 54 bis 62 bezüglich der Messlichtstrahlachse abhängen. Diese Positionen werden mittels der Kamera 26 aufgenommen. Die Auswertung eines solchen Erfassungsergebnisses kann z. B. durch einen Benutzer erfolgen, der die Lichtfleckpositionen auf einem an der Kamera 26 angeschlossenen Monitor beobachtet.

Die Zuordnung der auf dem Schirm 24 beobachtbaren Lichtflecke zu den einzelnen Flächen 54 bis 62 kann z. B. durch probeweises Verstellen der betreffenden Komponenten 50-2 bis 50-4 (und/oder durch Berücksichtigung der Lichtfleckintensitäten) ermittelt werden.

Sodann ist das Ziel der Justage, sämtliche Lichtflecke auf dem Schirm 24 (in der Schirmmitte) in Koinzidenz zu bringen, was der Benutzer durch entsprechende Justagevorgänge an den Komponenten 50-2 bis 50-4 unter gleichzeitiger Beobachtung der Lichtflecke in komfortabler Weise bewerkstelligen kann.

Es versteht sich, dass bei Systemkomponenten, welche mehrere fest zueinander ausgerichtete optische Flächen besitzen, wie z. B. die Flächen 54 und 56 des Laserkristalls 50-2, nur eine gemeinsame Justage beider Flächen möglich ist, wobei dann gegebenenfalls ein gewünschter Kompromiss bei der Justage der betreffenden Komponente eingegangen werden muss, falls die betreffenden Flächen, z. B. 54 und 56, nicht ohnehin bereits präzise planparallel zueinander ausgerichtet sind.

Jedenfalls ermöglicht die vorstehend erläuterte Vorgehensweise die Erzielung einer gewünschten Einstellung der Komponenten 50-2 bis 50-4 bezüglich eine gemeinsamen optische Achse, hier der optischen Achse 70.

Um schließlich noch den verbleibenden Resonatorspiegel 50-1 auf die optische Achse 70 auszurichten, wird der Autokollimator 10 z. B. in den Zwischenraum zwischen dem Laserkristall 50-2 und dem Güteschalter 50-3 platziert, so dass die von Reflexionen an den Flächen 52, 54 und 56 resultierenden Lichtflecke erfasst werden. Wenn in diese Situation der Autokollimator 10 zunächst so ausgerichtet wird, dass die von den Flächen 54 und 56 des Laserkristalls 50-2 resultierenden Lichtflecke in die Schirmmitte wandern, kann sodann durch entsprechende Verstellung des Spiegels 50-1 dessen zugehöriger Lichtfleck ebenfalls in die Schirmmitte gebracht werden, so dass der Spiegel 50-1 folglich ebenfalls auf die gemeinsame optische Achse 70 ausgerichtet ist.

Es versteht sich, dass das vorstehend beschriebene Lasersystem 50 und das hierfür durchgeführte Justageverfahren lediglich beispielhaft zu verstehen sind. Der Autokollimator 10 kann insofern auch an beliebig anderen optischen Systemen und in anderer Weise bzw. zu anderen Zwecken eingesetzt werden. Er stellt ein insofern universelles Justier-, Mess- und Prüfmittel nicht nur in der Lasertechnik dar.

Die spezielle Verwendung des Autokollimators 10 bzw. eines damit durchgeführten Justierverfahrens, wie beispielhaft oben beschrieben, für Lasersysteme ist jedoch insofern von besonderem Interesse, da Lasersysteme zunehmend kompakter und kleiner werden, so dass herkömmliche Autokollimatoren nicht oder nur sehr schwer (z. B. mit einer Platzierung außerhalb des Laserresonators) eingesetzt werden können.

Bei dem Autokollimator 10 ist das grundlegende Funktionsprinzip herkömmlicher Autokollimatoren beibehalten. Durch die erfindungsgemäße Modifikation der Abbildungsoptik mit dem "periskopartigen" Umlenkspiegel 22 ist der Autokollimator 10 jedoch zum Einsatz in beengten räumlichen Verhältnissen, insbesondere für die Laserjustage erheblich verbessert.

Die Ausstattung des Autokollimators 10 mit der Kamera 26, welche die von Beobachtungsschirm 24 "aufgefangenen" Lichtreflexionen (Lichtflecke) aufnimmt, ermöglicht eine für den Benutzer besonders komfortable Überprüfung bzw. Beobachtung des am Schirm 24 sich ergebenden Lichtfleckbilds. Die Verwendung bzw. Installation der Kamera 26 ist jedoch optional. Die Beobachtung könnte alternativ auch z. B. mit bloßem Auge oder mittels eines Okulars erfolgen. Bei Verwendung einer Kamera kann jedoch vorteilhaft auch eine Kopplung mit einem Rechnersystem vorgesehen werden, um die Auswertung der optischen Erfassung des oder der zurückreflektierten Messlichtstrahlen zu bewerkstelligen oder zu vereinfachen (z. B. wenn es darum geht, Winkelabweichungen einzelner Systemkomponenten quantitativ zu ermitteln).

In einer optionalen Weiterbildung des Autokollimators 10 ist dessen Gehäuse 14 im Bereich der Austrittsöffnung 30 (und/oder auf der gegenüberliegenden Gehäuseseite) mit Mitteln (z. B. Innen- oder Außengewinde, Steckverbindungsaussparung(en) oder -stift(e) oder dergleichen) versehen, um einen "Anlageadapter" am Gehäuse 14 befestigen (und gegebenenfalls justieren) zu können. Ein derartiger, z. B. auswechselbar vorgesehener An!ageadapter kann z. B. wie in Fig. 2 bei 31 gestrichelt eingezeichnet als ein an der Außenseite der Austrittsöffnung 30 aufgeschraubter oder aufgesetzter Adapterring ausgebildet sein. Bei einer manuellen Positionierung des Autokollimators 10 kann der Anlageadapter 31 ein nützliches Hilfsmittel darstellen, um durch eine gut definierte Anlage der distalen Adapterseite an einer stationären Komponente des zu prüfenden bzw. zu justierenden optischen Systems eine gewünschte Lage des Autokollimators 10 bezüglich des Systems zu gewährleisten bzw. zu vereinfachen.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

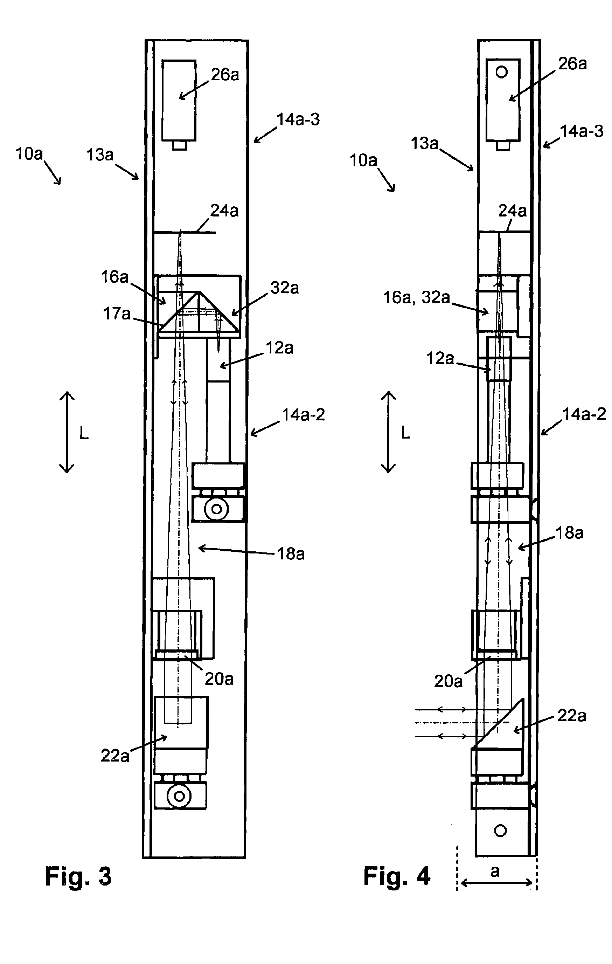

Die Fig. 3 und 4 zeigen ein weiteres Ausführungsbeispiel eines Autokollimators 10a mit einem modifizierten Gehäusekonzept. In den Fig. 3 und 4 ist jeweils nicht ein ganzes Gehäuse des Autokollimators 10a, sondern nur ein Gehäuseteil dargestellt, nämlich ein Montageprofil (hier z. B. ein L-Profil) 13a, welches zur Montage bzw. Lagerung der Autokollimatorkomponenten dient und nach seiner Fertigung (Bestückung mit den benötigten Komponenten) mit wenigstens einem weiteren (nicht dargestellten) Gehäuseteil kombiniert wird. Bei dem weiteren Gehäuseteil kann es sich z. B. ebenfalls um ein langgestrecktes Profilteil handeln, z. B. ein als Gehäusemantel dienendes hohles Vierkantprofil, in welches das bestückte Montageprofil 13a eingeschoben und darin befestigt wird.

Ein weiterer Unterschied des Autokollimators 10a gegenüber dem oben (mit Bezug auf Fig. 1) beschriebenen Autokollimator besteht darin, dass durch Einsatz eines weiteren Umlenkspiegels 32a im "Einkoppelpfad", d. h. zwischen einer Lichtquelle 12a und einer teildurchlässigen Spiegelfläche 17a die optische Achse der Lichtquelle 12a in Längsrichtung L verläuft.

Im Vergleich zu der Gehäusestruktur des obigen Ausführungsbeispiels gemäß Fig. 1 entfällt hier somit vorteilhaft ein quer von der Längsrichtung abstehender Gehäusebereich zur Unterbringung der Lichtquelle 12a. Wie bei dem vorangegangenen Ausführungsbeispiel besitzt auch der Autokollimator 10a einen in Längsrichtung L langgestreckten Gehäusebereich 14a-2 sowie den "jenseits eines Strahlteiler 16a" sich daran anschließenden und ebenfalls in Längsrichtung L verlaufenden Gehäusebereich 14a-3. Ein im Hinblick auf die Kompaktheit der Gehäusestruktur eher nachteiliger quer abstehender Gehäuseteil entfällt.

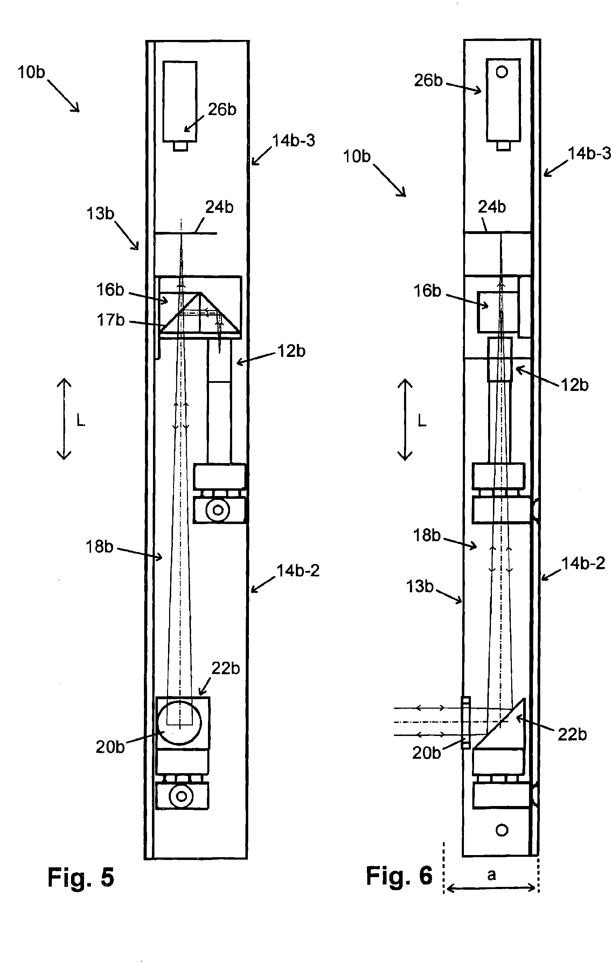

Die Fig. 5 und 6 zeigen ein weiteres Ausführungsbeispiel eines Autokollimators 10b, dessen Konstruktion bzw. Gehäusekonzept im Wesentlichen dem Ausführungsbeispiel gemäß der Fig. 3 und 4 entspricht.

Im Unterschied dazu ist bei dem Autokollimator 10b eine Kollimationslinse 20b im Verlauf des Messlichtstrahls jedoch nicht vor, sondern hinter einem für die "periskopartige" Strahlumlenkung vorgesehenen Umlenkspiegel 22b angeordnet.

Im fertigen Zustand des Autokollimators 10b kann diese Linse 20b somit vorteilhaft im Bereich derjenigen Gehäuseöffnung angeordnet sein, an welcher der Messlichtstrahl austritt, um an dieser Stelle gleichzeitig als ein Staubschutz zu fungieren.

Hinsichtlich der Ausführungsbeispiele einerseits gemäß der Fig. 3 und 4 und andererseits gemäß der Fig. 5 und 6 ist noch anzumerken, dass die Positionen der Lichtquelle und der Erfassungseinrichtung jeweils auch vertauscht sein könnten, wobei die in den Figuren dargestellte Anordnung dieser beiden Komponenten im Allgemeinen jedoch bevorzugt ist.

## Patentansprüche

1. Vorrichtung zum Prüfen der Ausrichtung wenigstens einer optischen Fläche (52 bis 62) eines optischen Systems (50), umfassend:
- ein Gehäuse (14),
- eine Lichtquelle (12) zur Erzeugung eines Messlichtstrahls,
- einen Strahlteiler (16) zum Einkoppeln des Messlichtstrahls in einen optischen Mess/Erfassungspfad (18), wobei der Mess/Erfassungspfad (18) in einer Längsrichtung (L) der Vorrichtung verläuft und in einem in der Längsrichtung (L) langgestreckten Gehäusebereich (14-2) des Gehäuses (14) untergebracht ist,
- eine Abbildungsoptik (20, 22) im Mess/Erfassungspfad (18), mittels welcher der eingekoppelten Messlichtstrahl kollimiert wird, bevor dieser aus der Vorrichtung austritt, um auf die zu prüfende optische Fläche (52 bis 62) aufzutreffen, und
- eine Erfassungseinrichtung (24, 26) zur Erfassung des an der zu prüfenden optischen Fläche (52 bis 62) zurückreflektierten Messlichtstrahls nach dessen Zurücklaufen entlang des Mess-/Erfassungspfads (18) und Auskoppeln mittels des Strahlteilers (16),
**dadurch gekennzeichnet, dass** die Abbildungsoptik (20, 22) einen Umlenkspiegel (22) aufweist, um den Messlichtstrahl in einer Richtung quer zur Längsrichtung (L) aus einer Austrittsöffnung (30) des langgestreckten Gehäusebereiches (14-2) austreten zu lassen, wobei eine im Bereich der Austrittsöffnung (30) in Austrittsrichtung des austretenden Messlichtstrahls betrachtete Gehäuseabmessung (a) um wenigstens einen Faktor 5 kleiner als eine in Längsrichtung (L) betrachtete Abmessung des Gehäuses (14) ist.

2. Vorrichtung nach Anspruch 1, wobei der Umlenkspiegel (22) der Abbildungsoptik (20, 22) derart angeordnet ist, dass der Winkel zwischen Längsrichtung (L) und Austrittsrichtung des Messlichtstrahls im Bereich von 80° bis 100° liegt.

3. Vorrichtung nach einem der vorangehenden Ansprüche, wobei die in Austrittsrichtung betrachtete Gehäuseabmessung (a) kleiner als 4 cm ist.

4. Vorrichtung nach einem der vorangehenden Ansprüche, wobei das Gehäuse (14) im Bereich der Austrittsöffnung (30) mit Mitteln zur Befestigung und/oder Justage eines Anlageadapters (31) versehen ist.

5. Vorrichtung nach einem der vorangehenden Ansprüche, wobei in der Austrittsöffnung (30) eine Linse (20) der Abbildungsoptik (20, 22) angeordnet ist.

6. Vorrichtung nach einem der vorangehenden Ansprüche, wobei die Einkopplung oder die Auskopplung des Messlichtstrahls bzw. des zurückreflektierten Messlichtstrahls am Strahlteiler (16) als eine Transmission durch den Strahlteiler (16) hindurch, also ohne Strahlumlenkung, vorgesehen ist, wohingegen bei der Auskopplung bzw. Einkopplung eine mehrfache Strahlumlenkung derart vorgesehen ist, dass der betreffende Strahl um 180° umgelenkt wird oder einen Parallelversatz ohne Umlenkung erfährt.

7. Verwendung einer Vorrichtung nach einem der Ansprüche 1 bis 6 zur Justage von optischen Komponenten (50-1 bis 50-4) eines Lasersystems (50).

8. Verfahren zum Prüfen und bevorzugt Justieren der Ausrichtung wenigstens einer optischen Fläche (52 bis 62) eines optischen Systems (50), umfassend:
- Erzeugen eines Messlichtstrahls,
- Einkoppeln des Messlichtstrahls in einen in einer Längsrichtung (L) verlaufenden optischen Mess/Erfassungspfad (18), der in einem in der Längsrichtung (L) langgestreckten Gehäusebereich (14-2) eines Gehäuses (14) untergebracht ist,
- Kollimieren des eingekoppelten Messlichtstrahls und Auftreffenlassen des kollimierten Messlichtstrahls auf die zu prüfende bzw. zu justierende optische Fläche (52 bis 62), und
- Erfassen des an der zu prüfenden optischen Fläche (52 bis 62) zurückreflektierten Messlichtstrahls nach dessen Zurücklaufen entlang des Mess/Erfassungspfads (18) und Auskoppeln aus dem Mess/Erfassungspfad (18),
**dadurch gekennzeichnet, dass** der Messlichtstrahl derart umgelenkt wird, dass dieser in einer Richtung quer zur Längsrichtung (L) aus einer Austrittsöffnung (30) des langgestreckten Gehäusebereiches (14-2) austritt, wobei eine im Bereich der Austrittsöffnung (30) in Austrittsrichtung des austretenden Messlichtstrahls betrachtete Gehäuseabmessung (a) um wenigstens einen Faktor 5 kleiner als eine in Längsrichtung (L) betrachtete Abmessung des Gehäuses (14) ist, und auf die zu prüfende optische Fläche (52 bis 62) gerichtet wird.

9. Vorrichtung zum Prüfen der Ausrichtung wenigstens einer optischen Fläche (52 bis 62) eines optischen Systems (50), umfassend:
- eine Lichtquelle (12) zur Erzeugung eines Messlichtstrahls,
- einen Strahlteiler (16) zum Einkoppeln des Messlichtstrahls in einen optischen Mess/Erfassungspfad (18), der in einer Längsrichtung (L) der Vorrichtung verläuft,
- eine Abbildungsoptik (20, 22) im Mess/Erfassungspfad (18), mittels welcher der eingekoppelte Messlichtstrahl kollimiert wird, bevor dieser aus der Vorrichtung austritt, um auf die zu prüfende optische Fläche (52 bis 62) aufzutreffen, und
- eine Erfassungseinrichtung (24, 26) zur Erfassung des an der zu prüfenden optischen Fläche (52 bis 62) zurückreflektierten Messlichtstrahls nach dessen Zurücklaufen entlang des Mess-/Erfassungspfads (18) und Auskoppeln mittels des Strahlteilers (16),
**dadurch gekennzeichnet, dass** die Abbildungsoptik (20, 22) einen Umlenkspiegel (22) aufweist, um den Messlichtstrahl in einer Richtung quer zur Längsrichtung (L) der Vorrichtung aus der Vorrichtung austreten zu lassen.

10. Verfahren zum Prüfen und bevorzugt Justieren der Ausrichtung wenigstens einer optischen Fläche (52 bis 62) eines optischen Systems (50), umfassend:
- Erzeugen eines Messlichtstrahls,
- Einkoppeln des Messlichtstrahls in einen in einer Längsrichtung (L) verlaufenden optischen Mess/Erfassungspfad (18),
- Kollimieren des eingekoppelten Messlichtstrahls und Auftreffenlassen des kollimierten Messlichtstrahls auf die zu prüfende bzw. zu justierende optische Fläche (52 bis 62), und
- Erfassen des an der zu prüfenden optischen Fläche (52 bis 62) zurückreflektierten Messlichtstrahls nach dessen Zurücklaufen entlang des Mess/Erfassungspfads (18) und Auskoppeln aus dem Mess/Erfassungspfad (18),
**dadurch gekennzeichnet, dass** der Messlichtstrahl derart umgelenkt wird, dass dieser in einer Richtung quer zur Längsrichtung (L) auf die zu prüfende optische Fläche (52 bis 62) gerichtet wird, wobei optional ein Justieren der optischen Fläche (52 bis 62) in Abhängigkeit vom Ergebnis der Erfassung durchgeführt wird.
